# EUROPÄISCHE PATENTSCHRIFT

(11) **EP 4 532 949 B1**
(45) Veröffentlichungstag und Bekanntmachung des Hinweises auf die Patenterteilung: **27.05.2026**
(21) Anmeldenummer: 23728053.2
(22) Anmeldetag: 23.05.2023
(51) Int. Cl.: F16D 48/06

(54) **BESTIMMEN EINER KUPPLUNGSTEMPERATUR EINER FAHRZEUGKUPPLUNG MITTELS BEDARFSGERECHTER AKTIVIERUNG EINES NEURONALEN NETZWERKS**
DETERMINING A CLUTCH TEMPERATURE OF A VEHICLE CLUTCH BY MEANS OF ON-DEMAND ACTIVATION OF A NEURAL NETWORK
DÉTERMINATION D'UNE TEMPÉRATURE D'EMBRAYAGE D'UN EMBRAYAGE DE VÉHICULE AU MOYEN D'UNE ACTIVATION À LA DEMANDE D'UN RÉSEAU NEURONAL

(30) Priorität: 02.06.2022 DE 102022205678
(43) Veröffentlichungstag der Anmeldung: 09.04.2025
(73) Patentinhaber: ZF Friedrichshafen AG, 88046 Friedrichshafen (DE)
(72) Erfinder: BIRK, Markus, 88441 Mittelbiberach (DE); BIEL, Steffen, 88046 Friedrichshafen (DE)
(74) Vertreter: ZF Friedrichshafen AG
(86) Internationale Anmeldenummer: PCT/EP2023/063762
(87) Internationale Veröffentlichungsnummer: WO 2023/232553

(56) Entgegenhaltungen:
- DE-A1- 102018 115 426
- DE-A1- 102020 206 309
- US-B2- 8 090 512

## Beschreibung

### Technisches Gebiet

Die vorliegende Erfindung betrifft ein Verfahren zum Bestimmen einer Kupplungstemperatur einer Fahrzeugkupplung mittels bedarfsgerechter Aktivierung eines neuronalen Netzwerks. Die Erfindung betrifft zudem ein Verfahren zum Trainieren eines neuronalen Netzwerks, welches dazu ausgebildet ist, eine Kupplungstemperatur einer Fahrzeugkupplung zu bestimmen. Die Erfindung betrifft ferner eine zugehörige Steuereinrichtung zur Bestimmung einer Kupplungstemperatur einer Fahrzeugkupplung mit bedarfsgerechter Aktivierung eines neuronalen Netzwerks.

### Stand der Technik

Die Temperatur einer Fahrzeugkupplung kann mittels eines klassischen regelbasierten mathematischen Modells berechnet werden. Die Berechnung kann in einem Getriebesteuergerät stattfinden. Hierfür kann maschinelles Lernen verwendet werden, beispielsweise ein neuronales Netz. Die Ausführung eines neuronalen Netzes auf dem Getriebesteuergerät benötigt jedoch viel Rechenleistung.

DE 10 2020 206 309 A1 betrifft eine Vorrichtung und Verfahren zum Erkennen und Reduzieren einer Störschwingung bei einem Fahrzeug.

### Darstellung der Erfindung

Die Erfindung bezieht sich in einem ersten Aspekt auf ein Verfahren zum Bestimmen einer Kupplungstemperatur einer Fahrzeugkupplung mittels eines neuronalen Netzwerks.

Die Fahrzeugkupplung kann in einem motorgetriebenen Fahrzeug, wie beispielsweise einem Kraftfahrzeug, einem Kraftrad oder einem zumindest teilweise elektrisch angetriebenen Zweirad verbaut sein. Mittels der Fahrzeugkupplung kann eine von dem Motor des Fahrzeugs aufgebrachte Antriebskraft an eine Antriebsachse des Fahrzeugs übertragen werden. Die Fahrzeugkupplung kann zumindest zwei verschiedene Schaltzustände beziehungsweise Gänge aufweisen, welche durch ein vorgegebenes Verhältnis zwischen dem Abtriebsdrehmoment des Motors und dem Antriebsdrehmoment der Antriebsachse definiert sein können.

Unter einer Kupplungstemperatur kann die Temperatur zumindest eines Kupplungselements verstanden werden, beispielsweise die Temperatur einer Kupplungsscheibe. Alternativ kann unter einer Kupplungstemperatur auch eine Temperatur der gesamten Fahrzeugkupplung verstanden werden, welche beispielsweise auf der Bestimmung eines Mittelwerts der einzelnen Temperaturen der Kupplungselemente basieren kann. Durch den Betrieb des Fahrzeugs kann sich die Temperatur der Fahrzeugkupplung ändern. Beispielsweise kann die Temperatur der Fahrzeugkupplung während eines Schaltvorgangs beziehungsweise eines Gangwechsels steigen. Steigt die Temperatur der Fahrzeugkupplung über einen kritischen Temperaturwert, kann dies zu Beschädigungen oder einem Ausfall der Fahrzeugkupplung führen. Die Bestimmung einer Kupplungstemperatur der Fahrzeugkupplung trägt daher zur Sicherheit des Fahrzeugs bei.

Unter einem neuronalen Netzwerk kann ein mathematisches Modell verstanden werden, welches die Struktur der Neuronen im menschlichen Gehirn zumindest teilweise nachbildet. Das neuronale Netzwerk kann mithilfe eines Computers erstellt werden. Das neuronale Netzwerk kann Eingangsknoten, Ausgangsknoten und mehrere Zwischenknoten aufweisen, welche zwischen den Eingangsknoten und den Ausgangsknoten angeordnet sind. Die Eingangsknoten können beispielsweise Datenschnittstellen sein, über welche Eingabedaten in das neuronale Netzwerk eingegeben werden können. Die Ausgangsknoten können beispielsweise Datenschnittstellen sein, über welche Ausgabedaten aus dem neuronalen Netzwerk ausgegeben werden können. Die Eingangsknoten können mit den Zwischenknoten und die Zwischenknoten können miteinander verbunden sein. Die Zwischenknoten können mit den Ausgangsknoten verbunden sein. Die Eingabedaten können historische Daten sein, welche zu einem bestimmten Zeitpunkt erfasst wurden. Alternativ oder zusätzlich können die Eingabedaten synthetische Daten sein, welche durch Verarbeitung erfasster beziehungsweise gemessener Daten erzeugt wurden. Analog hierzu können die Ausgabedaten historische Daten beziehungsweise synthetische Daten sein.

Auf den Zwischenknoten kann Information zumindest temporär zwischengespeichert werden. Es kann vorgesehen sein, dass auf den Zwischenknoten zumindest eine Rechenoperation ausgeführt wird. Die Eingabedaten können von den Eingangsknoten über die Zwischenknoten zu den Ausgangsknoten übertragen werden. Während dieser Übertragung können die Eingabedaten mathematisch verarbeitet werden, beispielsweise zu den Ausgabedaten umgewandelt werden. Die Zwischenknoten des neuronalen Netzwerks können in einer oder mehreren Schichten beziehungsweise Ebenen angeordnet sein. Die Zwischenknoten können innerhalb einer Schicht miteinander verbunden sein. Zusätzlich können die Zwischenknoten einer Schicht mit den Zwischenknoten anderer Schichten verbunden sein. Die einzelnen Verbindungen der Eingangsknoten, der Zwischenknoten und der Ausgangsknoten können mit mathematischen Gewichtungen versehen sein. Je nach Zweck des neuronalen Netzwerks können die einzelnen Gewichtungen der Verbindungen unterschiedlich sein. Während des Trainings des neuronalen Netzwerks können die Gewichtungen verändert werden. Durch die Anpassung der mathematischen Gewichtungen der Verbindungen der einzelnen Knoten während des Trainings kann von dem neuronalen Netzwerk ein Zusammenhang zwischen den Eingabedaten und den Ausgabedaten gelernt werden. Während der Verwendung des neuronalen Netzwerks zu dem vorgesehenen Zweck kann der gelernte Zusammenhang von dem neuronalen Netzwerk auf eingegebene Eingabedaten angewandt werden, um Ausgabedaten gemäß dem vorgegebenen Verwendungszweck des neuronalen Netzwerks zu erzeugen.

Zur Bestimmung einer Kupplungstemperatur kann beispielsweise ein Multi-Layer-Perceptron, MLP, als neuronales Netzwerk verwendet werden. Dieses neuronale Netzwerk weist zumindest eine Schicht von Zwischenknoten auf und verwendet zur Berechnung der Ausgabedaten zumindest eine nicht-lineare mathematische Funktion. Ein weiteres beispielhaftes neuronales Netzwerk zur Bestimmung einer Kupplungstemperatur kann ein Fully Connected Layer, FCL, Netzwerk sein. Bei diesem neuronalen Netzwerk sind alle Eingangsknoten, Zwischenknoten und Ausgangsknoten miteinander verbunden. Ferner kann zur Bestimmung einer Kupplungstemperatur beispielsweise ein Convolutional Neural Network, CNN, verwendet werden, bei welchem die Zwischenknoten verschiedener Schichten zumindest teilweise in Form einer mathematischen Faltungsfunktion miteinander verbunden sind.

Das Verfahren weist den Schritt des Erkennens eines Schaltvorgangs der Fahrzeugkupplung auf. Ein Schaltvorgang kann manuell, beispielsweise durch Betätigung eines Pedals durch den Fahrer des Kraftfahrzeugs oder automatisch durch ein Schaltprogramm des Kraftfahrzeugs erfolgen. Ein Schaltvorgang der Fahrzeugkupplung kann durch die Änderung zumindest eines Betriebsparameters der Fahrzeugkupplung erkannt werden. Beispielweise kann sich die Drehzahl eines Kupplungselements der Fahrzeugkupplung bei Durchführung des Schaltvorgangs ändern. Alternativ oder zusätzlich kann sich der auf einem Kupplungselement der Fahrzeugkupplung lastende Druck während des Schaltvorgangs ändern. Alternativ oder zusätzlich kann sich bei dem Schaltvorgang die Stromstärke eines durch ein Kupplungselement der Fahrzeugkupplung fließenden elektrischen Stroms ändern. Alternativ oder zusätzlich kann ein Schaltvorgang durch Wechseln eines Zielganges der Fahrzeugkupplung erkannt werden.

Das Verfahren weist ferner den Schritt der Aktivierung des neuronalen Netzwerks zur Bestimmung der Kupplungstemperatur auf. Das neuronale Netzwerk wird abhängig von dem Erkennen des Schaltvorgangs aktiviert. Durch Erkennen des Schaltvorgangs kann ein Aktivierungssignal, beispielsweise von einer Steuereinheit des Fahrzeugs, generiert werden. Dieses Steuersignal kann zur Aktivierung des neuronalen Netzwerks verwendet werden. Beispielweise kann dieses Steuersignal an eine Aktivierungseinheit übertragen werden, welche zur Aktivierung des neuronalen Netzwerks abhängig von dem Empfang des Steuersignals ausgebildet sein kann. Unter einer Aktivierung des neuronalen Netzwerks kann der Beginn einer von dem neuronalen Netzwerk durchgeführten Berechnung verstanden werden. Alternativ oder zusätzlich kann unter einer Aktivierung des neuronalen Netzwerks ein Datenzugriff des neuronalen Netzwerks auf für die Berechnung notwendige Daten verstanden werden.

Das Verfahren weist ferner den Schritt der Eingabe zumindest eines Wertes zumindest eines Betriebsparameters der Fahrzeugkupplung als Eingabedaten in das neuronale Netzwerk auf. Der zumindest eine Wert des zumindest einen Betriebsparameters der Fahrzeugkupplung kann repräsentativ für eine der Fahrzeugkupplung zugeführte Leistung sein. Alternativ oder zusätzlich kann der zumindest eine Wert des zumindest einen Betriebsparameters der Fahrzeugkupplung repräsentativ für eine Kupplungstemperatur der Fahrzeugkupplung sein. Der zumindest eine Wert des zumindest einen Betriebsparameters kann beispielsweise mittels einer Eingabevorrichtung an zumindest einen der Eingangsknoten des neuronalen Netzwerks übertragen werden. Alternativ kann der zumindest eine Wert des zumindest einen Betriebsparameters von einer Steuereinrichtung des Fahrzeugs über eine Datenschnittstelle an zumindest einen der Eingangsknoten des neuronalen Netzwerks übertragen werden. Der zumindest eine Wert des zumindest einen Betriebsparameters kann als Eingabedaten für die Verwendung des neuronalen Netzwerks zur Bestimmung der Kupplungstemperatur verwendet werden. Alternativ oder zusätzlich kann der zumindest eine Wert des zumindest einen Betriebsparameters als Eingabedaten für das Training des neuronalen Netzwerks verwendet werden.

Das Verfahren weist ferner den Schritt des Bestimmens einer Kupplungstemperatur durch das neuronale Netzwerk auf. Das neuronale Netzwerk bestimmt die Kupplungstemperatur basierend auf den Eingabedaten und einem von dem neuronalen Netzwerk gelernten Zusammenhang des zumindest einen Betriebsparameters mit der Kupplungstemperatur. Die Eingabedaten können von dem neuronalen Netzwerk, beispielsweise auf den Zwischenknoten, gemäß dem gelernten Zusammenhang verarbeitet werden, um die Kupplungstemperatur zu bestimmen. Beim Lernen des Zusammenhangs kann von dem neuronalen Netzwerk die mathematische Gewichtung der Verbindungen der einzelnen Knoten geändert werden, um die Kupplungstemperatur zu bestimmen.

Das Verfahren weist ferner den Schritt der Ausgabe der bestimmten Kupplungstemperatur durch das neuronale Netzwerk auf. Die bestimmte Kupplungstemperatur kann von dem neuronalen Netzwerk an eine dafür ausgebildete Vorrichtung zur elektrischen Signalverarbeitung ausgegeben werden. Die von dem neuronalen Netzwerk bestimmte und ausgegebene Kupplungstemperatur kann von weiteren Komponenten der Fahrzeugsteuerung verwendet werden. Beispielsweise kann mit der bestimmten Kupplungstemperatur ein Ansteuerwert für eine Steuereinheit des Fahrzeugs, beispielsweise eine Getriebesteuerung für ein Automatikgetriebe, erzeugt werden. Der Ansteuerwert kann ferner auf einer Anzeigeeinheit des Fahrzeugs dargestellt werden. Alternativ oder zusätzlich kann der auf der Kupplungstemperatur basierende Ansteuerwert von einer Auswerteeinheit verarbeitet werden, welche beispielsweise der Überwachung der Fahrsicherheit des Fahrzeugs dient.

Das Verfahren weist ferner den Schritt des Deaktivierens des neuronalen Netzwerks zur Bestimmung der Kupplungstemperatur auf. Das neuronale Netzwerk wird abhängig von der bestimmten Kupplungstemperatur deaktiviert. Unter einem Deaktivieren des neuronalen Netzwerks kann ein Beenden beziehungsweise ein Abbrechen der Berechnung der Kupplungstemperatur durch das neuronale Netzwerk verstanden werden. Alternativ oder zusätzlich kann unter einem Deaktivieren des neuronalen Netzwerks ein Beenden beziehungswese ein Abbrechen des Datenzugriffs des neuronalen Netzwerks auf Eingabedaten verstanden werden. Das Deaktivieren des neuronalen Netzwerks kann von einer dazu ausgebildeten Steuereinheit des Fahrzeugs vorgenommen werden. Alternativ kann das Deaktivieren des neuronalen Netzwerks von dem neuronalen Netzwerk selbst vorgenommen werden. Hierzu kann vorgesehen sein, dass das neuronale Netzwerk zum Erkennen einer Deaktivierungsbedingung trainiert ist, anhand derer das neuronale Netzwerk deaktiviert wird. Zum Deaktivieren des neuronalen Netzwerks kann die bestimmte Kupplungstemperatur verarbeitet werden, um eine von der Kupplungstemperatur abhängige Deaktivierungsbedingung zu ermitteln. Alternativ kann die bestimmte Kupplungstemperatur direkt, das heißt unverarbeitet, zum Deaktivieren des neuronalen Netzwerks verwendet werden.

Das vorgeschlagene Verfahren ermöglicht das Bestimmen einer Kupplungstemperatur mittels eines neuronalen Netzwerks. Hierdurch kann auf die Verwendung von klassischen mathematischen Modellen verzichtet werden, welche im Allgemeinen sehr komplex und daher zeitaufwendig zu berechnen sind. Durch die Verwendung eines neuronalen Netzwerks kann somit einerseits die zum Bestimmen der Kupplungstemperatur benötigte Berechnungszeit reduziert werden. Ferner ermöglicht das vorgeschlagene Verfahren das bedarfsgerechte Aktivieren des neuronalen Netzwerks zur Bestimmung der Kupplungstemperatur. Das neuronale Netzwerk wird nur dann aktiviert, wenn ein Schaltvorgang der Fahrzeugkupplung erkannt wird. Während eines Schaltvorgangs ist die Fahrzeugkupplung im Allgemeinen höheren Belastungen ausgesetzt als in einem Fahrbetrieb, während dem keine Schaltung erfolgt. Aufgrund dieser höheren Belastung der Fahrzeugkupplung ist während des Schaltvorgangs in besonderem Maße mit einer Schwankung der Kupplungstemperatur zu rechnen. Diese Schwankung der Kupplungstemperatur ist deshalb besonders zu überwachen. Findet hingegen kein Schaltvorgang statt, treten im Allgemeinen auch geringere Schwankungen der Kupplungstemperatur auf. Daher ist in diesem Zeitraum eine Bestimmung beziehungsweise Überwachung der Kupplungstemperatur nicht zwingend erforderlich. Das neuronale Netzwerk kann in diesem Zeitraum daher deaktiviert werden. Das vorgeschlagene Verfahren kann beispielsweise auf einem Getriebesteuergerät durchgeführt werden. In diesem Fall ermöglicht die bedarfsgerechte Aktivierung des neuronalen Netzwerks die bedarfsgerechte Verteilung der auf dem Getriebesteuergerät zur Verfügung stehenden Berechnungskapazitäten, wie eines zur Berechnung zur Verfügung stehenden Speicherplatzes und/oder einer zur Berechnung zur Verfügung stehenden Berechnungszeit. Das neuronale Netzwerk greift nur auf diese Berechnungskapazitäten zu, wenn ein Schaltvorgang erkannt wird. Wird kein Schaltvorgang erkannt, können die Berechnungskapazitäten des Getriebesteuergeräts anderweitig wendet werden, beispielsweise zur Sicherstellung einer Funktionalität des Getriebes.

Nach einer Ausführungsform wird das neuronale Netzwerk deaktiviert, wenn die bestimmte Kupplungstemperatur unterhalb eines definierten Schwellenwerts liegt. Der definierte Schwellenwert kann von einem Benutzer, beispielsweise einem Fahrer des Fahrzeugs, definiert werden. Alternativ kann der Schwellenwert von einem Hersteller des Fahrzeugs definiert werden. Der definierte Schwellenwert der Kupplungstemperatur kann für eine Kupplungstemperatur repräsentativ sein, unterhalb derer die Wahrscheinlichkeit einer Beschädigung der Fahrzeugkupplung aufgrund eines Temperaturanstiegs hinreichend gering ist. Der definierte Schwellenwert kann auf Erfahrungswerten basieren. Alternativ oder zusätzlich kann der definierte Schwellenwert auf mathematischen Berechnungen beziehungsweise experimentellen Versuchen basieren. Der definierte Schwellenwert kann für verschiedene Fahrzeugkupplungen unterschiedlich gewählt werden. Es kann vorgesehen sein, dass unterhalb des definierten Schwellenwerts eine Bestimmung beziehungsweise Überwachung der Kupplungstemperatur nicht mehr notwendig ist. Beispielsweise kann unterhalb des definierten Schwellenwerts eine Beschädigung der Kupplung aufgrund eines Temperaturanstiegs mit hinreichender Wahrscheinlichkeit ausgeschlossen werden. Fällt die Kupplungstemperatur unterhalb des definierten Schwellenwerts, ist eine Bestimmung der Kupplungstemperatur durch das neuronale Netzwerk nicht mehr zwingend erforderlich. Das neuronale Netzwerk kann deshalb deaktiviert werden. Die Bestimmung eines definierten Schwellenwerts für die Kupplungstemperatur, unterhalb dessen das neuronale Netzwerk deaktiviert wird, verbessert somit die Fahrsicherheit des Fahrzeugs.

Gemäß einer weiteren Ausführungsform erfolgt das Bestimmen der Kupplungstemperatur durch das neuronale Netzwerk innerhalb eines vorgegebenen Zeitintervalls. Das vorgegebene Zeitintervall kann von einem Benutzer, beispielsweise einem Fahrer des Fahrzeugs, vorgegeben werden. Alternativ kann das Zeitintervall von einem Hersteller des Fahrzeugs vorgegeben werden. Erfolgt die Bestimmung der Kupplungstemperatur durch das neuronale Netzwerk auf einem Getriebesteuergerät, kann das Zeitintervall abhängig von den auf dem Getriebesteuergerät zur Verfügung stehenden Berechnungskapazitäten vorgegeben werden. Beispielweise kann vorgesehen sein, dass das neuronale Netzwerk maximal 20 % oder maximal 10 % oder maximal 5 % oder maximal 1 % der insgesamt auf dem Getriebesteuergerät verfügbaren Berechnungszeit zur Bestimmung der Kupplungstemperatur verwendet. Die Bestimmung der Kupplungstemperatur durch das neuronale Netzwerk innerhalb des vorgegebenen Zeitintervalls kann in regelmäßigen Abständen wiederholt werden, solange das neuronale Netzwerk aktiviert ist. Alternativ kann die Bestimmung der Kupplungstemperatur durch das neuronale Netzwerk innerhalb des vorgegebenen Zeitintervalls in einer vorgegebenen maximalen Anzahl, beispielsweise einmal oder zweimal oder dreimal, erfolgen. Wurde die maximale Anzahl der vorgegebenen Berechnungsdurchläufe erreicht, kann vorgesehen sein, dass keine weitere Bestimmung der Kupplungstemperatur durch das neuronale Netzwerk erfolgt. Durch das Vorgeben des Zeitintervalls, innerhalb dessen das neuronale Netzwerk die Kupplungstemperatur bestimmt, kann das Bestimmungsverfahren an verschiedene Arten von Fahrzeugkupplungen beziehungswese verschiedene Arten von Steuergeräten, auf welchen die Bestimmung durchgeführt wird, angepasst werden. Ferner können die zur Bestimmung der Kupplungstemperatur durch das neuronale Netzwerk zur Verfügung stehenden Berechnungskapazitäten durch Vorgeben des Zeitintervalls an spezielle Vorgaben, beispielweise des Benutzers oder des Herstellers, angepasst werden.

Gemäß einer weiteren Ausführungsform wird das vorgegebene Zeitintervall abhängig von der bestimmten Kupplungstemperatur vorgegeben. Beispielsweise kann vorgesehen sein, dass das Zeitintervall umso kürzer gewählt wird, je höher die bestimmte Kupplungstemperatur ist. In diesem Fall kann die Bestimmung der Kupplungstemperatur bei vergleichsweise hohen Kupplungstemperaturen häufiger erfolgen als bei vergleichsweise niedrigen Kupplungstemperaturen. Andere Formen der temperaturabhängigen Bestimmung des Zeitintervalls sind von der vorliegenden Erfindung nicht ausgeschlossen. Die temperaturabhängige Bestimmung des Zeitintervalls ermöglicht eine Anpassung des Bestimmungsverfahrens an verschiedene Betriebszustände der Fahrzeugkupplung.

Nach einer Ausführungsform weist das Verfahren ferner einen Schritt des Bestimmens zumindest eines Eingangswerts auf, welcher für eine der Fahrzeugkupplung zugeführte Leistung repräsentativ ist. Der zumindest eine Eingangswert wird basierend auf einer Verarbeitung zeitlich aufeinanderfolgender Werte für die der Fahrzeugkupplung zugeführten Leistung bestimmt. Unter der der Fahrzeugkupplung zugeführten Leistung kann eine physikalische Leistung verstanden werden, also eine Energiemenge, welche der Fahrzeugkupplung während einer vorgegebenen Zeitspanne zugeführt wird. Beispielsweise kann es sich bei der der Fahrzeugkupplung zugeführten Leistung um eine der Fahrzeugkupplung während eines Schaltvorgangs beziehungsweise eines Gangwechsels derselben zugeführte Schaltleistung handeln. Die der Fahrzeugkupplung zugeführte Leistung kann für eine Änderung der Kupplungstemperatur der Fahrzeugkupplung repräsentativ sein.

Die der Fahrzeugkupplung zugeführte Leistung kann in bestimmten Zeitabständen erfasst werden. Die einzelnen Werte für die der Fahrzeugkupplung zugeführten Leistung können beispielsweise entsprechend ihres Erfassungszeitpunkts in aufsteigender Reihenfolge angeordnet werden. Diese zeitlich aufeinanderfolgenden Werte für die der Fahrzeugkupplung zugeführte Leistung können mathematisch verarbeitet werden, beispielsweise mittels einer vorgegebenen Rechenoperation wie der Bildung eines Mittelwerts.

Bei dieser Ausführungsform weist das Verfahren ferner den Schritt der Eingabe des zumindest einen Eingangswerts als Eingabedaten in das neuronale Netzwerk auf. Der zumindest eine Eingangswert kann beispielsweise mittels einer Eingabevorrichtung an zumindest einen der Eingangsknoten des neuronalen Netzwerks übertragen werden. Alternativ kann der zumindest eine Eingangswert von einer Steuereinrichtung des Fahrzeugs über eine Datenschnittstelle an zumindest einen der Eingangsknoten des neuronalen Netzwerks übertragen werden. Der zumindest eine Eingangswert kann als Eingabedaten für die Verwendung des neuronalen Netzwerks zur Bestimmung der Kupplungstemperatur verwendet werden. Alternativ oder zusätzlich kann der zumindest eine Eingangswert als Eingabedaten für das Training des neuronalen Netzwerks verwendet werden.

Bei dieser Ausführungsform basiert das Bestimmen der Kupplungstemperatur ferner auf einem zeitlichen Verlauf der Eingabedaten. Somit kann auch eine zeitliche Änderung der Eingabedaten von dem neuronalen Netzwerk berücksichtigt werden. Beispielsweise kann eine Abkühl- oder Aufheizphase der Fahrzeugkupplung erfasst und bei der Bestimmung der Kupplungstemperatur berücksichtigt werden. Ferner kann beispielsweise das Überschreiten eines Grenzwerts für die Kupplungstemperatur beziehungsweise eine Abweichung von einem Normverhalten der Kupplungstemperatur während der Aufheiz- oder Abkühlphase berücksichtigt werden. Die Kupplungstemperatur kann demnach außerdem präziser von dem neuronalen Netzwerk bestimmt werden. Weiterhin wird der zeitliche Verlauf der Eingabedaten nicht von dem neuronalen Netzwerk selbst bestimmt, sondern diesem lediglich in Form des verarbeiteten Eingangswerts übermittelt. Der für die Bestimmung der Kupplungstemperatur benötigte Rechenaufwand wird dadurch verringert. Somit kann die Struktur des neuronalen Netzwerks weniger komplex ausgebildet werden. Deshalb kann auch der für das neuronale Netzwerk benötigte Speicherplatz reduziert werden.

Gemäß einer Ausführungsform wird der zumindest eine Eingangswert in vorgegebenen Zeitintervallen bestimmt. Beispielsweise kann der zumindest eine Eingangswert in Zeitintervallen von 1 Sekunde, 100 ms oder 10 ms bestimmt werden. Die Bestimmung des Eingangswert kann somit an die Zeitintervalle angepasst werden, innerhalb derer das neuronale Netzwerk die Kupplungstemperatur bestimmt. Somit liegt dem neuronalen Netzwerk ein aktueller, das heißt innerhalb desselben Zeitintervalls bestimmter Eingangswert vor, innerhalb dessen die Kupplungstemperatur von dem neuronalen Netzwerk bestimmt wird. Die Kupplungstemperatur kann somit von dem neuronalen Netzwerk noch präziser bestimmt werden. Da die Bestimmung des Eingangswerts eine geringe Rechenlast erzeugt, kann durch eine von der Ausführung des neuronalen Netzwerks entkoppelte Ausführung der Bestimmung des Eingangswerts eine effiziente Berechnung bei gleichzeitiger hoher Performanz erfolgen.

Die Erfindung bezieht sich in einem zweiten Aspekt auf ein Verfahren zum Trainieren eines neuronalen Netzwerks, welches dazu ausgebildet ist, eine Kupplungstemperatur einer Fahrzeugkupplung zu bestimmen. Das Verfahren weist die folgenden Schritte auf: Bereitstellen zumindest eines Werts eines Betriebsparameters der Fahrzeugkupplung als Eingabedaten; Bereitstellen von Werten für die Kupplungstemperatur als Ausgabedaten; und Trainieren des neuronalen Netzwerks mit den Eingabedaten und den Ausgabedaten, um einen Zusammenhang der Eingabedaten und der Kupplungstemperatur zu lernen.

Die Werte für den zumindest einen Betriebsparameter der Fahrzeugkupplung und die Werte für eine Kupplungstemperatur können mittels dazu ausgebildeter Vorrichtungen für die elektrische Signalverarbeitung erfasst werden. Die erfassten Werte können einer Eingabevorrichtung zur Eingabe von Eingabedaten in das neuronale Netzwerk bereitgestellt werden. Alternativ können die erfassten Werte von den dazu ausgebildeten Vorrichtungen über eine Datenschnittstelle an die Eingangsknoten des neuronalen Netzwerks übertragen werden. Alternativ oder zusätzlich können die Eingabedaten beziehungsweise die Ausgabedaten als synthetische Daten vorliegen, welche durch Umwandlung von erfassten beziehungsweise bestimmten Daten erzeugt werden können.

Nach einer Ausführungsform wird das neuronale Netzwerk ferner mittels zumindest eines bestimmten Eingangswerts trainiert, welcher für eine der Fahrzeugkupplung zugeführte Leistung repräsentativ ist. Der zumindest eine Eingangswert wird basierend auf einer Verarbeitung zeitlich aufeinanderfolgender Werte für die der Fahrzeugkupplung zugeführten Leistung bestimmt.

Gemäß einer Ausführungsform wird das neuronale Netzwerk gemäß dem Verfahren des ersten Aspekts nach dem Verfahren des zweiten Aspekts trainiert. Hierdurch können die technischen Effekte und Vorteile der beiden Aspekte kombiniert werden.

Nach einer Ausführungsform ist der zumindest eine Betriebsparameter der Fahrzeugkupplung aus zumindest einem der folgenden ausgewählt: einem Drehmoment einer Antriebsachse eines Fahrzeugmotors, welche mit der Fahrzeugkupplung in mechanischer Wirkverbindung steht; einer Drehzahldifferenz zwischen zwei rotierenden Kupplungselementen der Fahrzeugkupplung; einer Drehzahl eines rotierenden Kupplungselements der Fahrzeugkupplung; einem auf ein Kupplungselement der Fahrzeugkupplung wirkenden mechanischen Druck; einer Stromstärke eines durch ein Kupplungselement der Fahrzeugkupplung fließenden elektrischen Stroms; und einer Sumpftemperatur eines Fahrzeuggetriebes zu Beginn eines Schaltvorgangs der Fahrzeugkupplung. Bei Kupplungselementen kann es sich beispielsweise um die Kupplungsscheiben einer Fahrzeugkupplung handeln, welche zur Drehmomentübertragung von dem Motor an die Antriebsachse verbunden werden können. Die obigen Parameter können für eine der Fahrzeugkupplung zugeführte Leistung repräsentativ sein. Alternativ oder zusätzlich können die obigen Parameter für eine Kupplungstemperatur der Fahrzeugkupplung repräsentativ sein. Durch Verwendung zumindest eines dieser Parameter kann die Bestimmung der Kupplungstemperatur somit erleichtert werden.

Die Erfindung bezieht sich in einem dritten Aspekt auf eine Steuereinrichtung zur Bestimmung einer Kupplungstemperatur einer Fahrzeugkupplung. Die Steuereinrichtung umfasst ein computer-lesbares Speichermedium, auf welchem ein neuronales Netzwerk zum Bestimmen der Kupplungstemperatur gespeichert ist. Ferner umfasst die Steuereinrichtung eine Erkennungsvorrichtung zur Erkennung eines Schaltvorgangs der Fahrzeugkupplung und eine Aktivierungsvorrichtung zur Aktivierung des neuronalen Netzwerks, abhängig von der Erkennung eines Schaltvorgangs. Die Steuereinrichtung umfasst ferner eine Eingabevorrichtung zur Eingabe von Eingabedaten in das neuronale Netzwerk, wobei die Eingabedaten zumindest einen Wert zumindest eines Betriebsparameters der Fahrzeugkupplung umfassen. Die Steuereinrichtung umfasst ferner eine Ausgabevorrichtung zur Ausgabe der bestimmten Kupplungstemperatur durch das neuronale Netzwerk und eine Deaktivierungsvorrichtung zur Deaktivierung des neuronalen Netzwerks, abhängig von der bestimmten Kupplungstemperatur.

Nach einer Ausführungsform wird die Kupplungstemperatur von dem neuronalen Netzwerk gemäß dem Verfahren nach dem ersten Aspekt bestimmt. Ferner wurde das neuronale Netzwerk gemäß dem Verfahren nach dem zweiten Aspekt trainiert.

Die genannten Vorrichtungen der Steuereinrichtung gemäß dem dritten Aspekt können zum Empfangen, zur Verarbeitung und zur Weiterleitung von elektrischen Signalen ausgebildet sein. Die genannten Vorrichtungen der Steuereinrichtung gemäß dem dritten Aspekt können zur Durchführung des Verfahrens gemäß dem ersten Aspekt und/oder dem zweiten Aspekt ausgebildet sein. Analog kann das Verfahren gemäß dem ersten Aspekt beziehungsweise dem zweiten Aspekt von der Steuereinrichtung gemäß dem dritten Aspekt durchgeführt werden. Die zu dem ersten beziehungsweise dem zweiten Aspekt erläuterten Ausführungsformen, technischen Effekte und Vorteile gelten somit analog auch für die Steuereinrichtung nach dem dritten Aspekt.

### Kurze Beschreibung der Zeichnungen

- Figur 1: zeigt ein Ablaufdiagramm mit Schritten eines Verfahrens zum Bestimmen einer Kupplungstemperatur einer Fahrzeugkupplung mittels eines neuronalen Netzwerks, nach einer Ausführungsform der Erfindung.
- Figur 2: zeigt ein Ablaufdiagramm mit Schritten eines Verfahrens zum Trainieren eines neuronalen Netzwerks, welches dazu ausgebildet ist, eine Kupplungstemperatur einer Fahrzeugkupplung zu bestimmen, nach einer weiteren Ausführungsform der Erfindung.
- Figur 3: zeigt schematisch eine Steuereinrichtung zur Bestimmung einer Kupplungstemperatur einer Fahrzeugkupplung mit einem neuronalen Netzwerk gemäß einer weiteren Ausführungsform der Erfindung.

### Detaillierte Beschreibung von Ausführungsformen

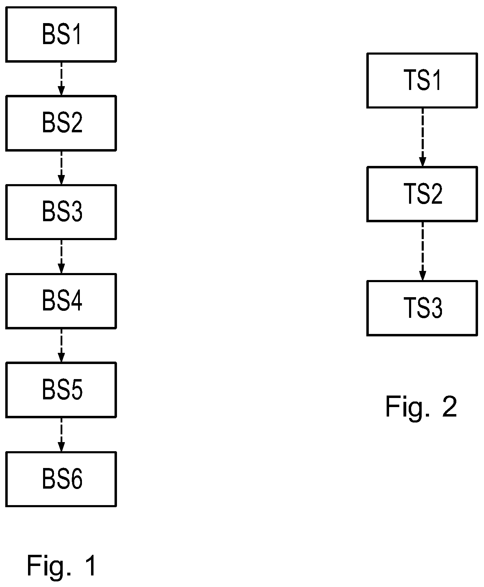

Figur 1 zeigt ein Ablaufdiagramm mit Schritten eines Verfahrens zum Bestimmen einer Kupplungstemperatur einer Fahrzeugkupplung mittels eines neuronalen Netzwerks nach einer Ausführungsform der Erfindung.

In einem ersten Bestimmungsschritt BS1 wird ein Schaltvorgang der Fahrzeugkupplung erkannt. Der Schaltvorgang wird im Ausführungsbeispiel der Figur 1 anhand eines Wechsels des Zielgangs der Fahrzeugkupplung erkannt.

In einem zweiten Bestimmungsschritt BS2 wird das neuronale Netzwerk zur Bestimmung der Kupplungstemperatur aktiviert. Das Aktivieren erfolgt abhängig von dem Erkennen des Schaltvorgangs. Das Aktivieren erfolgt im Ausführungsbeispiel der Figur 1 anhand eines Aktivierungssignals, welches von einer Aktivierungsvorrichtung bei Erkennen eines Schaltvorgangs erzeugt wird.

In einem dritten Bestimmungsschritt BS3 wird zumindest ein Wert zumindest eines Betriebsparameters der Fahrzeugkupplung als Eingabedaten in das neuronale Netzwerk eingegeben. Der zumindest eine Wert des zumindest einen Betriebsparameters wird hierbei an zumindest einen Eingangsknoten des neuronalen Netzwerks übertragen.

In einem vierten Bestimmungsschritt BS4 wird durch das neuronale Netzwerk eine Kupplungstemperatur bestimmt. Die Kupplungstemperatur wird basierend auf den Eingabedaten und einem von dem neuronalen Netzwerk gelernten Zusammenhang zwischen den Eingabedaten und der Kupplungstemperatur bestimmt.

Zur Bestimmung der Kupplungstemperatur werden die an die Eingangsknoten des neuronalen Netzwerks übertragenen Eingabedaten über von dem neuronalen Netzwerk mathematisch gewichtete Verbindungen an Zwischenknoten des neuronalen Netzwerks übertragen. Auf den Zwischenknoten werden die übertragenen Eingabedaten verarbeitet und über von dem neuronalen Netzwerk mathematisch gewichtete Verbindungen an Ausgangsknoten des neuronalen Netzwerks übertragen. Die mathematische Gewichtung der jeweiligen Verbindungen wurde von dem neuronalen Netzwerk während eines dem Bestimmungsverfahren zeitlich vorangehenden Trainingsvorgangs des neuronalen Netzwerks basierend auf einem Trainingsdatensatz angepasst. Auf zumindest einem Ausgangsknoten des neuronalen Netzwerks liegt am Ende der Verfahrensdurchführung ein Wert für eine Kupplungstemperatur vor.

In einem fünften Bestimmungsschritt BS5 wird die bestimmte Kupplungstemperatur von dem neuronalen Netzwerk ausgegeben. Die Kupplungstemperatur wird im Ausführungsbeispiel der Figur 1 an eine Ausgabevorrichtung ausgegeben.

In einem sechsten Bestimmungsschritt BS6 wird das neuronale Netzwerk zur Bestimmung der Kupplungstemperatur deaktiviert. Das Deaktivieren erfolgt in Abhängigkeit der bestimmten Kupplungstemperatur. Im Ausführungsbeispiel der Figur 1 erfolgt das Deaktivieren des neuronalen Netzwerks, wenn die bestimmte Kupplungstemperatur unterhalb eines definierten Schwellenwerts liegt.

Das neuronale Netzwerk kann abhängig von dem Erkennen eines Schaltvorgangs bedarfsgerecht aktiviert werden. Ferner kann das neuronale Netzwerk abhängig von der bestimmten Kupplungstemperatur bedarfsgerecht deaktiviert werden. Die Bestimmung der Kupplungstemperatur durch das neuronale Netzwerk kann somit an vorgegebene Berechnungskapazitäten einer Steuereinrichtung angepasst werden, auf welcher die Bestimmung durch das neuronale Netzwerk stattfindet.

Figur 2 zeigt ein Ablaufdiagramm mit Schritten eines Verfahrens zum Trainieren eines neuronalen Netzwerks, welches dazu ausgebildet ist, eine Kupplungstemperatur einer Fahrzeugkupplung zu bestimmen, nach einer weiteren Ausführungsform der Erfindung.

In einem ersten Trainierschritt TS1 wird zumindest ein Wert zumindest eines Betriebsparameters der Fahrzeugkupplung als Eingabedaten bereitgestellt. Dieser Wert ist für eine Kupplungstemperatur der Fahrzeugkupplung repräsentativ und wird an zumindest einen Eingangsknoten des neuronalen Netzwerks übertragen.

In einem zweiten Trainierschritt TS2 werden Werte für eine Kupplungstemperatur als Ausgabedaten bereitgestellt. Diese Werte sind gemessene Werte für die Kupplungstemperatur. In einem nicht dargestellten Ausführungsbeispiel sind die Werte für die Kupplungstemperatur synthetisch erzeugt. Diese Werte werden an zumindest einen Ausgangsknoten des neuronalen Netzwerks übertragen.

In einem dritten Trainierschritt TS3 wird das neuronale Netzwerk mit den Eingabedaten und den Ausgabedaten trainiert, um einen Zusammenhang der Eingabedaten mit der Kupplungstemperatur zu lernen.

Das zur Bestimmung der Kupplungstemperatur gemäß der Ausführungsform der Figur 1 verwendete neuronale Netzwerk kann gemäß dem Verfahren der Ausführungsform der Figur 2 trainiert werden.

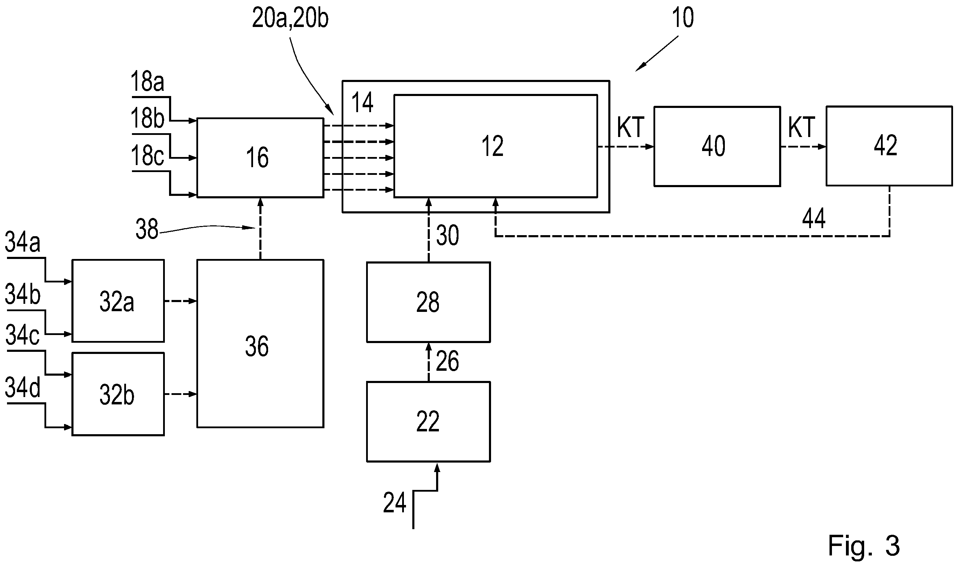

Figur 3 zeigt schematisch eine Steuereinrichtung 10 zur Bestimmung einer Kupplungstemperatur einer nicht dargestellten Fahrzeugkupplung mit einem neuronalen Netzwerk 12 gemäß einer weiteren Ausführungsform der Erfindung.

Die Steuereinrichtung 10 umfasst ein computerlesbares Speichermedium 14, auf welchem das neuronale Netzwerk 12 gespeichert ist. Die Steuereinrichtung 10 umfasst ferner eine Eingabevorrichtung 16, welche zum Empfang von Werten 18a, 18b, 18c von Betriebsparametern der Fahrzeugkupplung ausgebildet ist. Die Eingabevorrichtung 16 überträgt die Werte 18a, 18b, 18c der Betriebsparameter der Fahrzeugkupplung als Eingabedaten 20a an das neuronale Netzwerk 12.

Die Steuereinrichtung 10 umfasst eine Erkennungsvorrichtung 22, welche anhand eines Schaltsignals 24 einen Schaltvorgang der Fahrzeugkupplung erkennt. Abhängig von dem erkannten Schaltvorgang generiert die Erkennungsvorrichtung 22 ein Erkennungssignal 26 und überträgt dieses an eine Aktivierungsvorrichtung 28. Die Aktivierungsvorrichtung 28 generiert abhängig von dem Empfang des Erkennungssignals 26 ein Aktivierungssignal 30 und überträgt dieses an das neuronale Netzwerk 12. Abhängig von dem Empfang des Aktivierungssignals 30 wird das neuronale Netzwerk 12 aktiviert.

Die Steuereinrichtung 10 umfasst ferner Erfassungsvorrichtungen 32a, 32b, welche zeitlich aufeinanderfolgende Werte 34a, 34b beziehungsweise 34c, 34d für eine der Fahrzeugkupplung zugeführte Leistung erfassen. Bei den
Erfassungsvorrichtungen 32a, 32b handelt es sich um Tiefpass-Filter und bei den Werten 34a, 34b, 34c, 34d für eine der Fahrzeugkupplung zugeführte Leistung handelt es sich um eine der Fahrzeugkupplung während eines Schaltvorgangs beziehungsweise Gangwechsels zugeführte Schaltleistung. Die erfassten Werte 34a, 34b, 34c und 34d für die Schaltleistung werden von den Erfassungsvorrichtungen 32a, 32b an eine Bestimmungsvorrichtung 36 übertragen. Die Bestimmungsvorrichtung 36 bestimmt durch Verarbeiten der zeitlich aufeinanderfolgenden Werte 34a, 34b, 34c, 34d zumindest einen Mittelwert für die Schaltleistung. Der zumindest eine Mittelwert für die Schaltleistung wird von der Bestimmungsvorrichtung 36 als Eingangswert 38 an die Eingabevorrichtung 16 übertragen. Die Eingabevorrichtung 16 überträgt den Eingangswert 38 als Eingabedaten 20b an das neuronale Netzwerk 12.

Aus den Eingabedaten 20a, 20b wird von dem neuronalen Netzwerk 12 eine Kupplungstemperatur KT der Fahrzeugkupplung bestimmt. Die bestimmte Kupplungstemperatur KT wird von dem neuronalen Netzwerk 12 an eine Ausgabevorrichtung 40 übertragen. Die Ausgabevorrichtung 40 übertragt die bestimmte Kupplungstemperatur KT an eine Deaktivierungsvorrichtung 42. Abhängig von der bestimmten Kupplungstemperatur KT generiert die Deaktivierungsvorrichtung 42 ein Deaktivierungssignal 44, mittels welchem das neuronale Netzwerk 12 deaktiviert werden kann. Im Ausführungsbeispiel der Figur 3 wird das Deaktivierungssignal 44 für das neuronale Netzwerk 12 generiert, wenn die bestimmte Kupplungstemperatur KT unterhalb eines definierten Schwellenwerts liegt.

### Bezugszeichen

- 10: Steuereinrichtung
- 12: Neuronales Netzwerk
- 14: Speichermedium
- 16: Eingabevorrichtung
- 18a, 18b, 18c: Werte von Betriebsparametern
- 20a, 20b: Eingabedaten
- 22: Erkennungsvorrichtung
- 24: Schaltsignal
- 26: Erkennungssignal
- 28: Aktivierungsvorrichtung
- 30: Aktivierungssignal
- 32a, 32b: Erfassungsvorrichtungen
- 34a, 34b,: zeitlich aufeinanderfolgende Werte für eine der Fahrzeugkupplung
- 34c, 34d: zugeführte Leistung
- 36: Bestimmungsvorrichtung
- 38: Eingangswert
- 40: Ausgabevorrichtung
- 42: Deaktivierungsvorrichtung
- 44: Deaktivierungssignal
- KT: Kupplungstemperatur
- BS1: erster Bestimmungsschritt
- BS2: zweiter Bestimmungsschritt
- BS3: dritter Bestimmungsschritt
- BS4: vierter Bestimmungsschritt
- BS5: fünfter Bestimmungsschritt
- BS6: sechster Bestimmungsschritt
- TS1: erster Trainierschritt
- TS2: zweiter Trainierschritt
- TS3: dritter Trainierschritt

## Patentansprüche

1. Verfahren zum Bestimmen einer Kupplungstemperatur einer Fahrzeugkupplung mittels eines neuronalen Netzwerks (12), wobei das Verfahren die folgenden Schritte aufweist:
- Erkennen (BS1) eines Schaltvorgangs (24) der Fahrzeugkupplung;
- Aktivieren (BS2) des neuronalen Netzwerks (12) zur Bestimmung der Kupplungstemperatur, abhängig von dem Erkennen eines Schaltvorgangs (24);
- Eingabe (BS3) zumindest eines Wertes (18a, 18b, 18c) zumindest eines Betriebsparameters der Fahrzeugkupplung als Eingabedaten (20a) in das neuronale Netzwerk (12);
- Bestimmen (BS4) einer Kupplungstemperatur (KT) durch das neuronale Netzwerk (12), basierend auf den Eingabedaten (20a) und einem von dem neuronalen Netzwerk (12) gelernten Zusammenhang des zumindest einen Betriebsparameters mit der Kupplungstemperatur (KT);
- Ausgabe (BS5) der bestimmten Kupplungstemperatur (KT) durch das neuronale Netzwerk (12); und
- Deaktivieren (BS6) des neuronalen Netzwerks (12) zur Bestimmung der Kupplungstemperatur, abhängig von der bestimmten Kupplungstemperatur (KT).

2. Verfahren nach Anspruch 1, wobei das neuronale Netzwerk (12) deaktiviert wird, wenn die bestimmte Kupplungstemperatur (KT) unterhalb eines definierten Schwellenwerts liegt.

3. Verfahren nach Anspruch 1 oder 2, wobei das Bestimmen der Kupplungstemperatur durch das neuronale Netzwerk (12) innerhalb eines vorgegebenen Zeitintervalls erfolgt.

4. Verfahren nach Anspruch 3, wobei das Zeitintervall abhängig von der bestimmten Kupplungstemperatur vorgegeben wird.

5. Verfahren nach einem der Ansprüche 1 bis 4, wobei das Verfahren ferner die folgenden Schritte aufweist:
- Bestimmen zumindest eines Eingangswerts (38), welcher für eine der Fahrzeugkupplung zugeführte Leistung repräsentativ ist, wobei der zumindest eine Eingangswert (38) basierend auf einer Verarbeitung zeitlich aufeinanderfolgender Werte (32a, 32b, 32c, 32d) für die der Fahrzeugkupplung zugeführten Leistung bestimmt wird; und
- Eingabe des zumindest einen Eingangswerts (38) als Eingabedaten (20b) in das neuronale Netzwerk (12).

6. Verfahren nach Anspruch 5, wobei der zumindest eine Eingangswert (38) in vorgegebenen Zeitintervallen bestimmt wird.

7. Verfahren zum Trainieren eines neuronalen Netzwerks (12), welches dazu ausgebildet ist, eine Kupplungstemperatur (KT) einer Fahrzeugkupplung zu bestimmen, wobei das Verfahren die folgenden Schritte aufweist:
- Bereitstellen (TS1) zumindest eines Werts (18a, 18b, 18c) eines Betriebsparameters der Fahrzeugkupplung als Eingabedaten (20a);
- Bereitstellen (TS2) von Werten für die Kupplungstemperatur als Ausgabedaten; und
- Trainieren (TS3) des neuronalen Netzwerks (12) mit den Eingabedaten (20a) und den Ausgabedaten, um einen Zusammenhang der Eingabedaten und der Kupplungstemperatur zu lernen.

8. Verfahren nach Anspruch 7, wobei das neuronale Netzwerk (12) ferner mittels zumindest eines bestimmten Eingangswerts (38) trainiert wird, welcher für eine der Fahrzeugkupplung zugeführte Leistung repräsentativ ist, wobei der zumindest eine Eingangswert (38) basierend auf einer Verarbeitung zeitlich aufeinanderfolgender Werte (32a, 32b, 32c, 32d) für die der Fahrzeugkupplung zugeführten Leistung bestimmt wird.

9. Verfahren nach einem der Ansprüche 1 bis 6, wobei das neuronale Netzwerk (12) gemäß dem Verfahren zum Trainieren eines neuronalen Netzwerks nach einem der Ansprüche 7 oder 8 trainiert wurde.

10. Verfahren nach einem der vorhergehenden Ansprüche, wobei der zumindest eine Betriebsparameter der Fahrzeugkupplung aus zumindest einem der folgenden ausgewählt ist: einem Drehmoment einer Antriebsachse eines Fahrzeugmotors, welche mit der Fahrzeugkupplung in mechanischer Wirkverbindung steht; einer Drehzahldifferenz zwischen zwei rotierenden Kupplungselementen der Fahrzeugkupplung; einer Drehzahl eines rotierenden Kupplungselements der Fahrzeugkupplung; einem auf ein Kupplungselement der Fahrzeugkupplung wirkenden mechanischen Druck; einer Stromstärke eines durch ein Kupplungselement der Fahrzeugkupplung fließenden elektrischen Stroms; und einer Sumpftemperatur eines Fahrzeuggetriebes zu Beginn eines Schaltvorgangs der Fahrzeugkupplung.

11. Steuereinrichtung (10) zur Bestimmung einer Kupplungstemperatur einer Fahrzeugkupplung nach dem Verfahren eines der vorangehenden Ansprüche, die Steuereinrichtung umfassend:
- ein computer-lesbares Speichermedium (14), auf welchem ein neuronales Netzwerk (12) zur Bestimmung der Kupplungstemperatur gespeichert ist;
- eine Erkennungsvorrichtung (22) zur Erkennung eines Schaltvorgangs (24) der Fahrzeugkupplung;
- eine Aktivierungsvorrichtung (28) zur Aktivierung (30) des neuronalen Netzwerks (12), abhängig von der Erkennung (24) eines Schaltvorgangs;
- eine Eingabevorrichtung (16) zur Eingabe von Eingabedaten (20a, 20b) in das neuronale Netzwerk (12), wobei die Eingabedaten (20a, 20b) zumindest einen Wert (18a, 18b, 18c) zumindest eines Betriebsparameters der Fahrzeugkupplung umfassen;
- eine Ausgabevorrichtung (40) zur Ausgabe der bestimmten Kupplungstemperatur (KT) durch das neuronale Netzwerk (12); und
- eine Deaktivierungsvorrichtung (42) zur Deaktivierung (44) des neuronalen Netzwerks (12), abhängig von der bestimmten Kupplungstemperatur (KT).

12. Steuereinrichtung (10) nach Anspruch 11, wobei die Kupplungstemperatur (KT) von dem neuronalen Netzwerk (12) gemäß dem Verfahren nach einem der Ansprüche 1 bis 6 bestimmt wird; und wobei das neuronale Netzwerk (12) gemäß dem Verfahren zum Trainieren eines neuronalen Netzwerks nach einem der Ansprüche 7 oder 8 trainiert wurde.

## Claims

1. Method for determining a clutch temperature of a vehicle clutch by way of a neural network (12), wherein the method comprises the following steps:
- detecting (BS1) a shift process (24) of the vehicle clutch;
- activating (BS2) the neural network (12) for determining the clutch temperature, depending on the detection of a shift process (24);
- inputting (BS3) at least one value (18a, 18b, 18c) of at least one operating parameter of the vehicle clutch into the neural network (12) as input data (20a);
- determining (BS4) a clutch temperature (KT) by means of the neural network (12), based on the input data (20a) and a relationship between the at least one operating parameter and the clutch temperature (KT), as learned by the neural network (12);
- outputting (BS5) the determined clutch temperature (KT) by means of the neural network (12); and
- deactivating (BS6) the neural network (12) for determining the clutch temperature, depending on the determined clutch temperature (KT).

2. Method according to Claim 1, wherein the neural network (12) is deactivated when the determined clutch temperature (KT) is below a defined threshold value.

3. Method according to Claim 1 or 2, wherein the clutch temperature is determined by the neural network (12) within a predefined time interval.

4. Method according to Claim 3, wherein the time interval is predefined depending on the determined clutch temperature.

5. Method according to one of Claims 1 to 4, wherein the method further comprises the following steps:
- determining at least one input value (38) representative of a power supplied to the vehicle clutch, wherein the at least one input value (38) is determined based on processing of temporally successive values (32a, 32b, 32c, 32d) for the power supplied to the vehicle clutch; and
- inputting the at least one input value (38) into the neural network (12) as input data (20b).

6. Method according to Claim 5, wherein the at least one input value (38) is determined in predefined time intervals.

7. Method for training a neural network (12) which is designed to determine a clutch temperature (KT) of a vehicle clutch, wherein the method comprises the following steps:
- providing (TS1) at least one value (18a, 18b, 18c) of an operating parameter of the vehicle clutch as input data (20a);
- providing (TS2) values for the clutch temperature as output data; and
- training (TS3) the neural network (12) with the input data (20a) and the output data in order to learn a relationship between the input data and the clutch temperature.

8. Method according to Claim 7, wherein the neural network (12) is further trained by means of at least one determined input value (38) representative of a power supplied to the vehicle clutch, wherein the at least one input value (38) is determined based on processing of temporally successive values (32a, 32b, 32c, 32d) for the power supplied to the vehicle clutch.

9. Method according to one of Claims 1 to 6, wherein the neural network (12) was trained in accordance with the method for training a neural network according to either of Claims 7 and 8.

10. Method according to one of the preceding claims, wherein the at least one operating parameter of the vehicle clutch is selected from at least one of the following: a torque of a drive axle of a vehicle engine, said drive axle being operatively mechanically connected to the vehicle clutch; a speed difference between two rotating clutch elements of the vehicle clutch; a speed of a rotating clutch element of the vehicle clutch; a mechanical pressure acting on a clutch element of the vehicle clutch; an amperage of an electric current flowing through a clutch element of the vehicle clutch; and a sump temperature of a vehicle transmission at the start of a shift process of the vehicle clutch.

11. Control device (10) for determining a clutch temperature of a vehicle clutch in accordance with the method of one of the preceding claims, the control device comprising:
- a computer-readable storage medium (14) on which a neural network (12) for determining the clutch temperature is stored;
- a detection apparatus (22) for detecting a shift process (24) of the vehicle clutch;
- an activation apparatus (28) for activating (30) the neural network (12), depending on the detection (24) of a shift process;
- an input apparatus (16) for inputting input data (20a, 20b) into the neural network (12), wherein the input data (20a, 20b) comprise at least one value (18a, 18b, 18c) of at least one operating parameter of the vehicle clutch;
- an output apparatus (40) for outputting the determined clutch temperature (KT) by means of the neural network (12); and
- a deactivation apparatus (42) for deactivating (44) the neural network (12), depending on the determined clutch temperature (KT).

12. Control device (10) according to Claim 11, wherein the clutch temperature (KT) is determined by the neural network (12) in accordance with the method according to one of Claims 1 to 6; and wherein the neural network (12) was trained in accordance with the method for training a neural network according to either of Claims 7 and 8.

## Revendications

1. Procédé de détermination d'une température d'embrayage d'un embrayage de véhicule au moyen d'un réseau neuronal (12), le procédé comportant les étapes suivantes :
- reconnaissance (BS1) d'une opération de changement de rapport (24) de l'embrayage de véhicule ;
- activation (BS2) du réseau neuronal (12) destiné à déterminer la température d'embrayage, en fonction de la reconnaissance d'une opération de changement de rapport (24) ;
- entrée (BS3) d'au moins une valeur (18a, 18b, 18c) d'au moins un paramètre de fonctionnement de l'embrayage de véhicule en tant que données d'entrée (20a) dans le réseau neuronal (12) ;
- détermination (BS4) d'une température d'embrayage (KT) par le réseau neuronal (12) sur la base des données d'entrée (20a) et d'une relation apprise par le réseau neuronal (12) de l'au moins un paramètre de fonctionnement avec la température d'embrayage (KT) ;
- délivrance en sortie (BS5) de la température d'embrayage (KT) déterminée par le réseau neuronal (12) ; et
- désactivation (BS6) du réseau neuronal (12) destiné à déterminer la température d'embrayage, en fonction de la température d'embrayage (KT) déterminée.

2. Procédé selon la revendication 1, le réseau neuronal (12) étant désactivé lorsque la température d'embrayage (KT) déterminée est inférieure à une valeur de seuil définie.

3. Procédé selon la revendication 1 ou 2, la détermination de la température d'embrayage par le réseau neuronal (12) s'effectuant dans un intervalle de temps prédéfini.

4. Procédé selon la revendication 3, l'intervalle de temps étant prédéfini en fonction de la température d'embrayage déterminée.

5. Procédé selon l'une des revendications 1 à 4, le procédé comportant en outre les étapes suivantes :
- détermination d'au moins une valeur d'entrée (38), laquelle est représentative d'une puissance acheminée à l'embrayage de véhicule, l'au moins une valeur d'entrée (38) étant déterminée sur la base d'un traitement de valeurs consécutives dans le temps (32a, 32b, 32c, 32d) de la puissance fournie à l'embrayage de véhicule ; et
- entrée de l'au moins une valeur d'entrée (38) en tant que données d'entrée (20b) dans le réseau neuronal (12).

6. Procédé selon la revendication 5, l'au moins une valeur d'entrée (38) étant déterminée dans des intervalles de temps prédéfinis.

7. Procédé d'entraînement d'un réseau neuronal (12), lequel est configuré pour déterminer une température d'embrayage (KT) d'un embrayage de véhicule, le procédé comportant les étapes suivantes :
- fourniture (TS1) d'au moins une valeur (18a, 18b, 18c) d'un paramètre de fonctionnement de l'embrayage de véhicule en tant que données d'entrée (20a) ;
- fourniture (TS2) de valeurs de la température d'embrayage en tant que données de sortie ; et
- entraînement (TS3) du réseau neuronal (12) avec les données d'entrée (20a) et les données de sortie en vue d'apprendre une relation entre les données d'entrée et la température d'embrayage.

8. Procédé selon la revendication 7, le réseau neuronal (12) étant en outre entraîné au moyen d'au moins une valeur d'entrée (38) déterminée, laquelle est représentative d'une puissance acheminée à l'embrayage de véhicule, l'au moins une valeur d'entrée (38) étant déterminée sur la base d'un traitement de valeurs consécutives dans le temps (32a, 32b, 32c, 32d) de la puissance fournie à l'embrayage de véhicule.

9. Procédé selon l'une des revendications 1 à 6, le réseau neuronal (12) ayant été entraîné conformément au procédé d'entraînement d'un réseau neuronal selon l'une des revendications 7 ou 8.

10. Procédé selon l'une des revendications précédentes, l'au moins un paramètre de fonctionnement de l'embrayage de véhicule étant sélectionné parmi au moins l'un des suivants : un couple d'un arbre d'entraînement d'un moteur de véhicule, qui est en liaison mécanique fonctionnelle avec l'embrayage de véhicule ; une différence de régime entre deux éléments d'embrayage en rotation de l'embrayage de véhicule ; un régime d'un élément d'embrayage en rotation de l'embrayage de véhicule ; une pression mécanique agissant sur un élément d'embrayage de l'embrayage de véhicule ; une intensité de courant d'un courant électrique circulant à travers un élément d'embrayage de l'embrayage de véhicule ; et une température de carter d'une boîte de vitesses de véhicule au début d'une opération de changement de rapport de l'embrayage de véhicule.

11. Dispositif de commande (10) destiné à déterminer une température d'embrayage d'un embrayage de véhicule conformément au procédé selon l'une des revendications précédentes, le dispositif de commande comprenant :
- un support de stockage (14) lisible par ordinateur sur lequel est mémorisé un réseau neuronal (12) destiné à déterminer la température d'embrayage ;
- un dispositif de reconnaissance (22) destiné à reconnaître une opération de changement de rapport (24) de l'embrayage de véhicule ;
- un dispositif d'activation (28) destiné à activer (30) le réseau neuronal (12), en fonction de la reconnaissance (24) d'une opération de changement de rapport ;
- un dispositif d'entrée (16) destiné à l'entrée de données d'entrée (20a, 20b) dans le réseau neuronal (12), les données d'entrée (20a, 20b) comprenant au moins une valeur (18a, 18b, 18c) d'au moins un paramètre de fonctionnement de l'embrayage de véhicule ;
- un dispositif de sortie (40) destiné à délivrer en sortie la température d'embrayage (KT) déterminée par le réseau neuronal (12) ; et
- un dispositif de désactivation (42) destiné à désactiver (44) le réseau neuronal (12), en fonction de la température d'embrayage (KT) déterminée.

12. Dispositif de commande (10) selon la revendication 11, la température d'embrayage (kT) étant déterminée par le réseau neuronal (12) conformément au procédé selon l'une des revendications 1 à 6 ; et le réseau neuronal (12) ayant été entraîné conformément au procédé d'entraînement d'un réseau de neurones selon l'une des revendications 7 ou 8.
